# EUROPEAN PATENT APPLICATION

(11) **EP 2 341 016 A1**
(43) Date of publication of application: **06.07.2011**
(21) Application number: 09016080.5
(22) Date of filing: 29.12.2009
(51) Int. Cl.: B65G 1/04, B65G 1/137

(54) **Cage and pallet storage system**

(71) Applicant: Deutsche Post AG, 53113 Bonn (DE)
(72) Inventor: Lemola, Jussi, 02100 Espoo (FI); Piskunen, Tomi, 01760 Vantaa (FI)
(74) Representative: Jostarndt, Hans-Dieter

(57) **Abstract**

The invention relates to a cage and pallet storage system for storing and providing pallets (2) comprising at least one carrier means (3, 32) suitable to transport pallets (2) of different pallet types in an arbitrary sequence, multiple pallet selection units (4) arranged within the carrier means (3, 32), multiple pallet receiving units (5, 51, 52, 53, 54, 55) connected to the pallet selection units (4) to receive selected pallets (2) from the pallet selection units (4) and/or to forward pallets (2) to the pallet selection units (4), and at least one control unit (6) for controlling the system (1), wherein the pallet selection unit (4) is suitable to select at least one pallet (2) according to the type of the pallet out of multiple pallets (2) of different pallet types passing the pallet selection unit (4) and to forward the selected pallet (2) to the pallet receiving unit (5, 51, 52, 53, 54, 55) and to forward the non-selected pallets (2) along the at least one carrier means (3, 32), and wherein each pallet receiving unit (5, 51, 52, 53, 54, 55) is an element of the group of elements comprising a pallet lift (51), a pallet storage magazine (52), a pallet pre-stacker (53), a pallet entry terminal (54) and/or a pallet exit terminal (55) in order to store the pallets (2) and/or to lift the pallets (2) from a first level of height (FL) to a second level of height (SL) and/or to insert the pallets (2) into the system (1) and/or provide the pallets (2) for being taken out of the system (1).

## Description

### FIELD OF THE INVENTION

The invention relates to a cage and pallet storage system for storing and providing pallets and to a method to operate such a system.

### BACKGROUND OF THE INVENTION

Pallets are commonly used as carrier for transporting goods. Pallets can have different sizes and weights. It is a large logistic effort for transport companies handling a large number of goods to provide a suitable number of pallets of the right size at the right place in order to be loaded with goods. There is a demand to reduce the logistic effort to provide the right pallet at the right place in time. WO 97/39968 discloses a pallet stacker for up-stacking (stacking of single pallets for storage purposes) or down-stacking (forwarding single pallets from a stack of pallets) of pallets, resting on each other in a stack. The pallet stacker comprises a lift mechanism being disposed to lift the lower pallet one or more pallet heights enabling up-stacking of pallets or enabling the removal of the lowest pallet of the stack and thus down-stacking from beneath. Such a stacker stores a larger number of pallets covering only a small floor area slightly larger than one pallet size. However, only one type of pallets can be stored in the pallet stacker. Therefore at least one stacker per pallet type is required to provide each type of pallet when needed. Additionally, the area in front of each stacker has to be large enough to enable forklifts to deliver empty pallets to be stacked in the stacker and vice versa. Even if the stackers require only a small area, the handling of pallets with forklifts requires a large working area around the pallet stackers resulting in required large factory building. There is a further demand to reduce the floor area required to provide this service.

### SUMMARY OF THE INVENTION

It is an object of the present invention to provide a system for storing and providing pallets, which reduces the logistic effort to provide the right pallet at the right place in time.

The object is solved by a system for storing and providing pallets comprising at least one pallet receiving unit arranged as a pallet storage magazine for storing pallets of a certain type of pallets, at least one pallet receiving unit arranged as a pallet exit terminal for providing pallets, at least one carrier means connecting the pallet receiving units to forward pallets between the pallet receiving units, at least one control unit at least connected to the pallet receiving units via a data connection to control at least storing, requesting, and providing of the pallets, and at least one requesting terminal connected to the control unit to request the providing of a certain number of pallets of a certain type of pallets to one or more pallet exit terminals for being taken out of the system.

The present invention provides a system, where pallets of different types can be provided at any pallet exit terminal on demand. Such a system requires the lowest logistic effort for the workers to further handle pallets outside the system. The few or the single pallet exit terminal reduces the total floor area required for forklift transport of pallets to only one or a few suitable avenues for the forklifts regardless on the number of pallet receiving units arranged as pallet storage magazines within the system. The carrier means distribute the pallets in a space saving manner from one or more pallet storage magazines to the one or more pallet exit terminals. The pallet forwarding requires only the floor area occupied by the carrier means. The pallets can be stored in a space saving manner in multiple pallet storage magazines applying vertical pallet stacking. For larger logistic centers with a larger number of pallets handled per time, there may be more than one pallet exit terminals with corresponding additional avenues for forklifts. However, even in this case the required floor space for the system according to the present invention is significantly smaller compared to logistic centers according to prior art handling the same amount of pallets of different pallet types. Also the logistic effort is strongly reduced due to the simple picking-up (inserting pallets into the system or obtaining pallets from the system) of pallets of any type in a random sequence. Any kind of pre-sorting or after-sorting is not necessary. The process provides pallets of any kind from the pallet storage magazines to the pallet exit terminals, which may serve in a second mode also as pallet entry terminal for the pallets handled by the system according to the present invention.

The control unit could be a computer, a computer system comprising additional terminals connected to a central computer or a server-client based system with clients located at each pallet receiving unit and requesting terminal and/or other additional components/units of the system. The data connection could be established by suitable data cables and/or wireless. The selection process of particular pallets for further forwarding is controlled by the control unit, where e.g. a control program running on said control unit comprising a look-up table specifying the desired destination of each pallet type. The storage process may be controlled by the control unit, where e.g. a control program running on said control unit may initiate forwarding of the pallets to the storage magazine located as close as possible to the pallet entry terminals, where the to-be-stored pallets are inserted into the system, to reduce the forwarding time. The process of providing pallets may be controlled by the control unit in a way providing the pallet from the pallet storage magazine located a close as possible to the pallet exit terminal, where the pallet will be taken out of the system, to reduce the forwarding time. In case of multiple pallet exit terminals acting also as a pallet entry terminal, the particular pallet storage magazine storing and providing the particular pallet may differ. The control unit may initiate transfer of stored pallets from at least one first pallet storage magazine to a pallet second storage magazine to provide storage volume for other pallet types. The number of pallets of a certain type within the system may differ for different periods of time. To minimize the forwarding time to store and/or provide certain types of pallets, a transport of currently non-required pallet types to pallet storage magazines located more far away from the pallet entry and/or exit terminals may be necessary. Such a system control unit will provide an improved efficiency of the system according to the present invention with respect to the time required to forward a pallet from the pallet entry terminal to a pallet storage magazine or from the pallet storage magazine to the pallet exit terminal. As an example the control unit may also administrate the number, location, type, and storage time of the pallets within the system. The control unit may also administrate orders of pallets, preferable of a certain type of pallets, made in advance for reserving pallets for future transports.

A suitable requesting terminal may be a computer terminal connected to the control unit, where the number of pallets and/or the pallet type can be inserted. The requesting terminal comprises suitable means to request the certain number of pallets of a certain type of pallets, e.g. a key board to enter the data. The requesting terminal may also comprise a display, e.g. a computer monitor, to check the inserted data and to correct the inserted data if necessary. The data connection to the control unit could be arranged via permanently installed computer cable or via a wireless connection. The requesting terminal may be arranged at the pallet exit terminal or at a certain distance to the pallet exit terminal in order to allow the workers to request pallets from different places improving the availability of pallets on demand.

The term "carrier means" denotes any kind of means able to carry pallets from one place to another place automatically without any further action of an operator. Carrier means according to the present invention might be conveyor belts of any type, for example equipped with rollers, roles, or a moving carrier surface like luggage conveyor belts. The term "pallets" comprises any carrier for goods, which can be loaded with goods to transport the goods on top of the carrier. As an example, pallets may be common wood pallets such as ISO- and/or EUR-pallets or cages such a plastic cages or metal cages, which could be foldable or non-foldable. The type of pallets (or pallet type) denotes the geometrical dimensions (length, depth, height of the pallet), material, weight, load capacity specific for a certain pallet. As an example, so-called ISO pallets of the international organization of standards may have dimensions (length / depths) of 1000 x 1200 mm² or 800 x 1200 mm² in Europe (other dimensions are used in North America or Australia), European (EUR) pallets may have the same dimensions or in same versions dimensions of 800 x 600 mm², 600 x 400 mm², or 400 x 300 mm². Additionally, there are several versions of transport cages with different height in use. The pallet material may differ between pallet types leading to a different load capacity of the specific pallet types. For example, applied pallet materials are wood, steel, aluminum, plastic, cardboard etc. The different pallet materials lead to different pallet weights ranging between 10 kg and more than 100 kg. The worldwide integration of transport logistic makes it necessary to provide and handle a large number of different pallet types at the same place requiring an effective storing of empty pallets and a random access the any specific pallet type on demand. The system according to this invention exactly provides this support with the fewest required floor space.

The connection between the receiving units and/or between additional components/units of the system in the context of physically forwarding pallets might be achieved via a carrier means, e.g. a conveyor belt. A connection in this context may comprise more than one pallet receiving units and/or additional components/units of the system arranged within the connecting carrier means. Alternatively, the pallet receiving unit may be arranged directly beside another pallet receiving unit and/or additional components/units of the system without any gap in between avoiding any carrier means to connect the units. In the latter case, the pallets are directly transferred from one the pallet receiving unit into the other pallet receiving unit. The term "receiving" denotes a pallet transport into the pallet receiving unit. In an embodiment, the pallet receiving unit is suitable to reverse the transport direction.

In an embodiment the requesting terminal is a remote control terminal to insert the required number of pallets and/or the required pallet type, preferably a hand-held device with a data insert field, more preferably with a display displaying the inserted data. Local requesting terminals enable workers to request the required pallets locally improving the availability of pallets on demand. As an example the hand-held device could be connected to the control unit wireless via a RFID connection, via a radio connection or via an infrared connection. In another embodiment the requesting terminal is a remote terminal connected to the control unit via internet.

In another embodiment the requesting terminal is arranged to allow requesting of a particular pallet exit terminal for providing the pallets. Requesting a particular terminal allows separating pallet inserting into the system at one pallet exit terminal also arranged as a pallet entry terminal from providing pallets for being taken out of the system at another pallet exit terminal different to the first one.

In another embodiment the pallet exit terminals comprise a signal means, preferably a visual signal means, to indicate the pallet exit terminal providing the requested pallets. The signal means may be any suitable signal means recognizable from workers transporting pallets, e.g. for driver driving forklifts. The signal means could be devices providing an audio or visual signal. Audio signals may be provided via loudspeakers, visual signals may be provided by displays and/or signal lamps, e.g. arranged at the front side of the pallet exit terminal at a position visible for the workers waiting to receive the requested pallet. The signal means is connected to the control unit

A pallet storage magazine denotes all kinds of magazines suitable for storing pallets for a longer period of time, e.g. a vertical pallet stacker. In a preferred embodiment the pallet storage magazine comprises multiple movable pick-up elements to support at least one pallet and a lifting unit suitable to vertically lift the movable pick-up elements and to hold the pick-up element at a storing level in order to vertically stack the pallets one upon the other each supported by at least one movable pick-up element inside the pallet storage magazine. A vertical storage of pallets required the fewest floor area to store a certain number of pallets on the particular floor area.

In another embodiment at least one of the pallet receiving units is arranged as a pallet pre-stacker and/or an entry terminal and/or the pallet exit terminal on a first working level accessible for forklifts and/or trucks. A pallet pre-stacker denotes a unit, where a stack of the pallets can be delivered, e.g. from a forklift, in order to forward the pallets to a pallet storage magazine. The pre-stacker forwards single pallet to the carrier means of the system by down-stacking the stack of pallets directly after receiving the stacked pallet, e.g. from a forklift, or in the opposite process the pre-stacker might be able to stack a certain number of pallets (up-stacking) of the same type of pallets to be subsequently removed from the pre-stacker, e.g. by a forklift. The pallet receiving unit may comprises similar size and/or weight identification means in order to be able to up-stack, down-stack or further forward pallets to a certain pallet storage magazine. The term "pallet entry terminal" denotes a pallet receiving units, where pallets can be inserted (entry) into the system for further forwarding the pallets along the carrier means. The pallet entry and exit terminals may have the same functionality as the pre-stacker without the functionality to be able to up-stack and/or down-stack pallets. A pallet pre-stacker is an embodiment of pallet entry and exit terminals with the additional functionality being able to up-stack and/or down-stack pallets or stacks of pallets. In a preferred embodiment at least one pallet pre-stacker and/or at least one pallet entry terminal and/or at least one pallet exit terminal, is arranged on a first working level accessible for forklifts and/or trucks. A working level is accessible to forklifts and/or trucks, if these vehicles are able to drive on this working level. The first working level may be the same level as the loading level (or first level of height) of the pallet. In another preferred embodiment the pallet pre-stacker and/or the pallet entry terminal and/or the pallet exit terminal comprise a cavity suitable to insert the fork of a forklift below an insert and/or exit level of the pallets, preferably a cavity with a U-shape. The term "forklift" comprises any suitable means to transport pallet comprising a fork as the loading surface for the pallets, e.g. forklift trucks or pallet carrier, either motor driven or carried by hand.

In another embodiment at least one pallet receiving unit is arranged as a pallet lift to lift the pallets from a first level of height to a second level of height in order to forward the pallets to a second carrier means arranged at a second level of height. The term "pallet lift" denotes all devices able to move pallets vertically from a first level of height to a second level of height. The first level of height is the loading level of the pallet lift, which could be on the same level as the first working level or could be arranged above the first working level. The second level of height can be above or below the first level of height. The second carrier means might be the same type of carrier means as the carrier means located on other levels. In a preferred embodiment at least a first pallet lift is arranged on the first working level accessible for forklifts and/or trucks. The possibility to move pallets from the first working level as the level, where traffic of transport vehicles requiring sufficient empty space for driving the vehicles takes place, to a second level of height, where no traffic of transport vehicles is present, allows storage of pallets for later providing on demand with a much higher storage density. In such a system the same amount of pallets can be stored in a smaller storage volume or for a certain volume; a larger number of pallets can be stored in this volume compared to other storage systems, where the pallets are stored only on first working level. The first pallet lift can be arranged directly on top of the first working level. The term "arranged on the first working level" also covers arrangements, where the first pallet lift is mounted at a wall in a certain height, where the wall is build on top of the first working level.

In another embodiment the difference of height between the second level of height and the first working level is larger than the height of forklifts and/or trucks. This enables the full access of forklifts and trucks to the area of the first working level, where traffic of transport vehicles is required in order to insert pallets into the system and/or to provide pallets to be further transported by these vehicles.

The loading level of pallet receiving units may be at the first working level or above the first working level, at least with a height difference to the first working level in the order of the diameter of the wheels of the forklifts and/or trucks. The advantage of such an arrangement is the possibility to directly insert pallets into the pallet receiving unit from the transport vehicles, e.g. forklifts or trucks, carrying the pallets outside the system without any additional handling of the pallets.

In another embodiment at least a second pallet lift connected to at least the second carrier means is arranged on a second working level. The storage capacity of the system for storing and providing pallets can be increased without increasing the ground area by adding additional levels (floors) on top or below the present levels. Another lift arranged on the second working level is able to move pallets to another third working level. The same applies for third, fourth, fifth, etc. pallet lifts lifting or lowering pallets to the corresponding additional working levels.

In another embodiment the system further comprises at least one pallet selection unit arranged within the carrier means to select at least one pallet according to the type of the pallet out of multiple pallets of different pallet types passing the pallet selection unit and to forward the selected pallet to the pallet receiving unit and to forward the non-selected pallets along the at least one carrier means. Preferably at least one pallet receiving unit is connected to each of the pallet selection units. In other embodiments, there may up to two or three pallet receiving units connected to one pallet selection unit. The pallet selection unit may select pallets of one type or pallets or a certain number of types of pallets to forward the pallets to the receiving unit. Alternatively, the pallet selection unit may forward a stack of a certain number of pallets of the same type to the pallet receiving unit. The forwarding may be directed to the pallet receiving unit, from the pallet receiving unit or to another pallet selection unit. The logistic effort is further strongly reduced by the pallet selection unit due to the simple inserting of pallets in an arbitrary sequence into the system. The control unit will initiate forwarding of the pallets via the pallet selection units selecting the further forwarding direction of the selected pallets to the desired storage magazines able to store the particular type of the selected pallets. Any kind of pre-sorting is not necessary. The sorting will be carried out within the system by the pallet selection units. The pallet selection unit is arranged within the carrier means. The pallet selection unit is a component within the carrier means, able to be just passed by the pallets on their way to their final destination within the system. The term "passing" denotes the forwarding of the pallets along the carrier means to its initial destination. In contrast to "passing", the term "selecting" denotes a change of the initial destination of the pallets within the system into another destination within the system by the pallet selection unit. The carrier means is connected to one side of the pallet selection unit and continues on the other side of the pallet selection unit seen in the transporting direction of the carrier means.

In an embodiment the pallet selection unit comprises size detection means arranged to identify the geometrical size of the pallet and/or the alignment of the pallet relative to the pallet receiving unit and/or weight detection means arranged to identify the weight of the pallets in order to select the pallet of at least one pallet type, preferably further comprising alignment means to align the selected pallet relative to the pallet receiving unit. Size detection means may be any suitable means to determine the geometrical size of the pallet either directly by measurements or indirectly by detecting (reading) information, from which the geometrical size of the pallet can be derived. The term "identifying the geometrical size" is the generic term for both possibilities. The alignment of the pallet denotes the side of the pallet facing towards the pallet receiving unit. The alignment of pallets may vary. For symmetric pallets, the alignment is the same for all sides. However, for non-symmetric pallets, the alignment of the pallets might be important to fit into the pallet receiving unit. As an example, a pallet having sides with different length and width may only fit into the pallet receiving unit, if one particular side (long side or short side) faces towards the pallet receiving unit. The weight detection means denote any suitable means to identify the weight of the pallets. Here again, the weight of the pallet may be determined either directly by measurements (e.g. with a scale) or indirectly by detecting information, from which the weight of the pallet can be derived. The information to derive geometrical size and/or weight of a pallet may be a coding applied to the pallet specifying the pallet type characteristic to the geometrical size and weight of the pallet. The information may be coded as a barcode and may be read by a barcode reader. The alignment means may be mechanical sliders pushing and/or turning the pallet in the right position. Alternatively the alignment means might be a rotatable upper surface of the pallet selection unit carrying the pallet and being connected to a motor rotating the upper surface by 90°, 180°, 270° relative to its original orientation in order to align a certain side of the pallet facing towards the pallet receiving unit. People skilled in the art may consider other alignment means within the scope of the present invention.

In another embodiment the pallet selection unit or parts of the pallet selection unit are arranged as the weighting means, preferably as a floor scale or platform scale, more preferably as a ball top scale or a roller top scale. In this case, the weight of the pallets are measured and not derived from any coded information. This prevents pallet type identification failures in case of damaged and/or non-readable coded information applied to the pallets. Also some pallet types may not carry any coded information. The direct measurements of the weight (and also of the geometrical size) of the pallets enables to process (forwarding and/or selecting) all kind of pallets applied worldwide without any required additional effort such as inspecting pallet, whether they carry code information and eventually applying such information to pallets not carrying such coded information. The complete pallet selecting unit might be placed on a floor scale as the weighting means, or parts of the pallet selection unit might be placed on a scale as the weighting means as part of the pallet selection unit, or the upper surface of the pallet selection unit carrying the pallets is the upper surface of the weighting means, e.g. a scale.

In a preferred embodiment the size detection means comprise reading means suitable to read coded information attached to the pallet specifying the pallet type and/or the alignment of the pallet and/or optical detection means to measure the geometrical size and/or the alignment of the pallet, preferably multiple optical sensors and/or an array of optical sensors and/or a CCD camera. As previously disclosed, one possibility to identify the size of a pallet is to derive the pallet size from information present on the pallet. The information might be coded information, e.g. a barcode or a RFID tag or any other machine-readable information. The reading means are suitable means adapted to the type of coding to read the coded information, such as bar code reader, receiver for the RFID signal or optical sensors like CCD cameras or CCD chips to recognize and analyze an image. The coded information may be applied to the pallet at a certain side at a certain position. With reading means applied to each side of the pallet, the coded information represents also the alignment of the pallet with respect to the pallet receiving unit. The pallet can subsequently be aligned with the desired side towards the pallet receiving unit. Alternatively, the pallet size and/or the alignment of the pallet might be detected by optical techniques such as image recognition, e.g. applying a CCD camera or a CCD chip. In other embodiment, optical sensors such as photo sensors establishing one or more light barriers are used to detect the geometrical dimensions of the pallet. From the dimensions in case of asymmetric pallets (different length and width), the alignment of the pallet with respect to the pallet receiving unit can be derived and adjusted if necessary. The optical sensors might be arranged as a one-dimensional array parallel to the carrying surface of the pallet selection unit on one, two or all sides of the pallet selection unit to detect the length of one, two or all sides of the pallet. In case of optical sensor (single sensors or sensors arranged as an array) arranged on one side of the pallet selection unit, the pallet selection unit able to rotate the pallet may rotate the pallet as an example by 90° in order to measure the length of two different sides of the pallet. This procedure may continue for 180°, 270° etc. The array of the sensors might be arranged at a height sufficiently above the upper surface of the pallet not to hamper forwarding of the pallet along the carrier means and/or to the pallet receiving unit. People skilled in the art may consider alternative size detection means within the scope of this invention.

In an embodiment the pallet receiving unit comprises positioning means, preferably arranged at two sides above a loading surface of the pallet receiving unit, to position the selected pallets inside the pallet receiving unit, more preferably the positioning means are adjustable to different pallet types. The loading surface of the pallet receiving unit is the surface carrying the pallet after receiving it from the pallet selection unit. The positioning means might be vertically arranged plates made of any suitable material, e.g. plastic or metall. The positioning means may be shaped to broaden at the side facing towards the pallet selection unit. Such positioning means are able to correct the pallet position even in case of slight miss-alignments of the pallet at the pallet selection unit. The positioning means may be any kind of suitable positioning means. Preferably, the positioning means are at least mounted on two sides of the pallet receiving unit parallel to the moving direction of the pallet during transfer of the pallet from the pallet selection unit to the pallet receiving unit. This positioning means might be movable in a vertical direction to the moving direction of the pallet during transfer to the receiving unit in order to be adjusted to the width of the pallets. The pallet selection unit may be arranged to control the movement of the positioning means of the pallet receiving unit as a function of the identified pallet type. The pallet receiving unit may also comprise positioning means mounted at the side of the pallet positioning unit opposite to the pallet selection unit in order to prevent the pallet passing the pallet receiving unit. This particular positioning means might be arranged as able to be lifted above the upper surface of the pallet in order to access the pallet from the opposite side of the pallet receiving unit with respect to the pallet selection unit, The access may be executed with a forklift.

The invention further relates to a method to operate a system for storing and providing pallets according to the present invention comprising the steps of
- requesting a certain number of pallets of a certain type of pallets to be provided at one or more pallet receiving units arranged as pallet exit terminals via a requesting terminal connected to a control unit controlling at least storing, requesting, and providing of the pallets,
- forwarding the pallets from at least one pallet receiving unit arranged as a pallet storage magazine to the pallet exit terminal, and
- providing the pallets at the pallet exit terminal for being taken out of the system.

In an embodiment the method further comprises the steps of
- transporting pallets of different pallet types in an arbitrary sequence via at least one carrier means to at least one pallet selection units,
- selecting the pallet according to the type of the pallets out of multiple pallets of different types of pallets passing the pallet selection unit,
- forwarding the selected pallet to at least one receiving unit connected to the pallet selection unit, and
- forwarding the non-selected pallets along the at least one carrier means.

In an embodiment the method further comprises the step of lifting or lowering the pallet from a first working level a second working level by a pallet receiving units arranged as a pallet lift in order to improve the pallet storage capacity of the system.

### BRIEF DESCRIPTION OF THE DRAWINGS

These and other aspects of the invention will be apparent from and elucidated with reference to the embodiments described hereinafter.
Fig.1: system according to the present invention with three working levels in a side view.

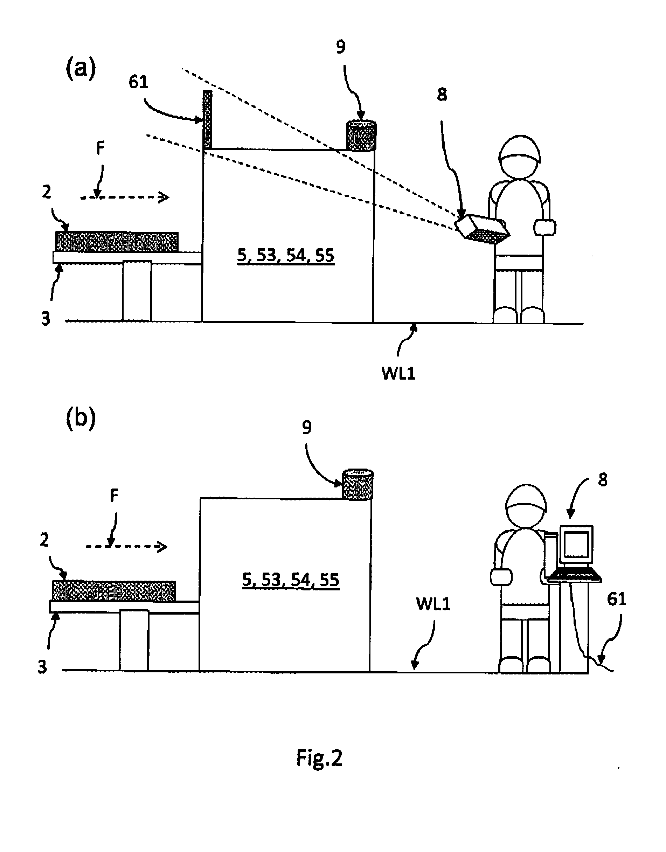

Fig.2: two embodiments of the system with requesting terminals (a) as hand-held devices, and (b) as computer terminal.
Fig.3: pallet selection unit and pallet receiving unit in a top view.
Fig.4: pallet selection unit with weighting means in a side view.
Fig.5: pallet selection unit with rotatable alignment means in (a) top view and (b) side view.
Fig.6: pallet selection unit with two arrays of carrier means in (a) top view and (b) side view.
Fig.7: pallet receiving unit as a pallet lift.
Fig.8: pallet receiving unit as a pallet storage magazine.
Fig.9: pallet receiving unit as a pallet pre-stacker, entry / exit terminal.
Fig.10:system according to the present invention controlled by a control unit.

### DETAILED DESCRIPTION OF EMBODIMENTS

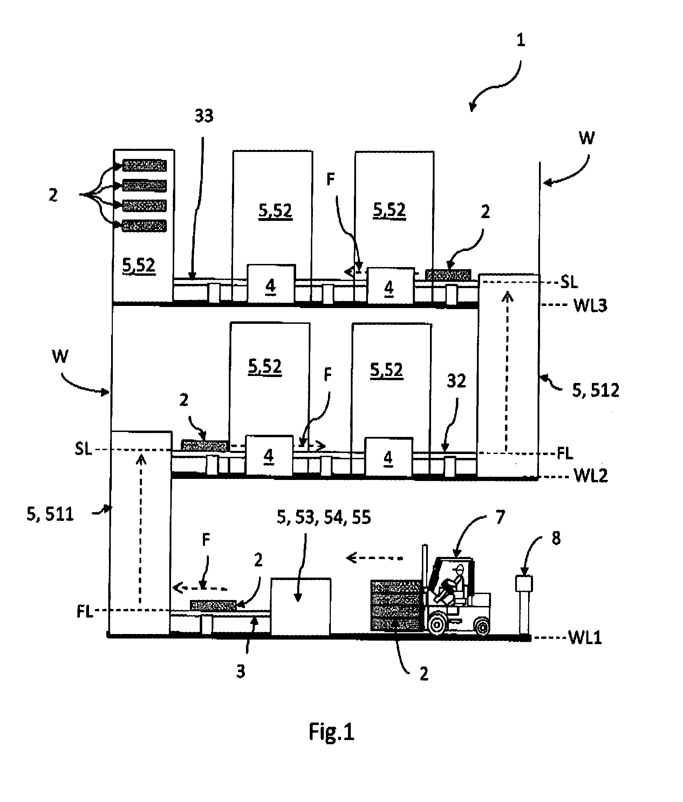

Fig.1 shows a system 1 for storing and providing pallets 2 comprising carrier means 3, 32, 33 to transport pallets 2 of different types of pallets in an arbitrary sequence and four pallet selection units 4 arranged within the carrier means 32, 33. The number of pallet selection units 4 shown in this figure is only one example. The number of required pallet selection means depends on the particular logistic requirements of the system. Several pallet receiving units 5 are directly connected to the pallet selection units 4 to receive selected pallets 2 from the pallet selection units 4. In this example, four pallet receiving units 5 are arranged as pallet storage magazines 52. The pallets are forwarded and stored in three working levels, where the first working level WL1 is the level of transporting pallets 2 from the other parts of the logistic center (also denoted as outside world) to the system and vice versa, e.g. with a forklift 7. The term "outside world" denotes all logistic processes outside the system 1, e.g. the loading of trucks in the logistic center. The pallets 2 are inserted into the system 1 at the pallet entry terminal 54 in order to forward F single pallets along the carrier means 3. The pallet entry terminal 54 could be arranged as a pallet pre-stacker 53, where a stack of pallets can be inserted into the system and the pallet pre-stacker 53 forwards F single pallets 2 along the carrier means 3 by down-stacking the stack of pallets. The pallet entry terminal may be arranged simultaneously also as a pallet exit terminal 55, where the driver of the transport vehicles (here a forklift) or another worker can request pallets 2 at the requesting terminal 8 connected to the control unit (not shown here) of the system 1 controlling storing and providing of pallets 2. In fig.1, the pallets 2 are forwarded F to a pallet receiving unit 5 arranged as a first pallet lift 511 to lift the pallets 2 from a first level of height FL to a second level of height in order to further forward F the pallets 2 along a second carrier means 32 arranged on a second working level WL2 above the first working level WL1. The first and second working levels WL1, WL2 have a vertical distance (distance of height) larger than the height of the forklift 7 enabling the forklift 7 to access any required area within the working level WL1. As an example shown here, the system 1 comprises a further third working level WL3. The pallets 2 pass several pallet selection units 4 connected to pallet storage magazines 52 in order to enter the second pallet lift 512 to be lifted from a first level of height FL to a second level of height SL in the second pallet lift 512 in order to be further forwarded along a third carrier means 33 to pass another pallet selection unit 4 connected to a pallet storage magazine 52 to enter the last pallet selection unit 4, which selects the pallet 2 and forwards the selected pallet 2 to a particular pallet storage magazine 52 located at the end of the third carrier means 33. In this embodiment, the last pallet selection unit 4 selecting the pallet 2 is connected to two pallet storage magazines, where the left storage magazine is selected to store the pallet 2. This pallet storage magazine might be chosen to store the pallet 2, because only this pallet storage magazine 52 can store pallets 2 of the selected pallet type or the stored pallet type will not be provided during the next time is and is therefore forwarded to a pallet storage magazine 52 far away from the pallet entry/exit terminal 53, 54, 55 in order to reserve free storage space for pallet types frequently used during the next time. Decisions, where to store pallets 2 and from which pallet storage magazine 52 pallets 2 will be provided, are made by the control unit 6 (not shown in figure 1) comprising suitable computer programs to optimize the pallet flow. People skilled in the art are able to provide such programs. The working levels WL1, WL2, WL3 may denote floors of a building or levels, where pallets 2 are forwarded. Such working levels can be also arranged between floor levels. Not all working levels are necessarily accessible for transport vehicles such as forklifts.

Fig, 2 shows the requesting of pallets for two embodiments of the requesting terminal, (a) a hand-held device 8, and (b) as a computer terminal 8 arranged at a fixed location, preferably installed at a height, which allows inserting of a request directly from the driver seat of a forklift. A worker may request a certain number of pallets 2 of a certain pallet type by inserting number and type into the requesting terminal 8. Preferably the requesting terminal 8 provides a list of accessible pallet types and the available number of pallets 2 of the particular pallet type. The worker can choose type and number of pallets 2. In case of a request of more pallets than available, the requesting terminal 8 provides an error message to the worker to inform him about the non available pallets. More preferably, the requesting terminals 8 offer the worker alternatives for his request. The requesting terminal 8 may transmits the request (a) wireless to an antenna, which is connected to the control unit with a data connection 61, or alternatively (b) via a data cable 61 connecting the computer terminal 8 with the control unit. Both request results in a forwarding of a pallet 2 from a pallet storage magazine along the carrier means 3 to a pallet receiving unit 5 arranged as a pallet exit terminal 55, which could be a simple pallet exit terminal 55 for providing single pallets or a pallet pre-stacker 53 suitable to provide stacks of pallets. Both embodiments of the pallet exit terminal 53, 55 might be arranged also as a pallet entry terminal 54 enabling inserting and providing of pallets 2 at the same place. The requesting terminal 8 is arranged on the first working level WL1, e.g. a fixed installation or in case of a hand-held device (because only the first working level is accessible for workers). The requesting terminal 8 may also be permanently installed in the transport vehicles for transporting pallets, e.g. in the forklifts, the allow requesting of pallets 2 from any place inside the logistic center. The requesting terminals might be connected to the control unit via radio frequency, where a suitable number of request receiving stations connected to the control unit are arranged inside the logistic terminal. The terminal, where the pallets are provided, could be indicated to the workers by a signal means 9, here arranged as a signal lamp on top of the pallet exit terminal 55. People skilled in the art may consider other suitable signal means such as audio alarm signal such as loudspeakers or combinations thereof within the scope of this invention.

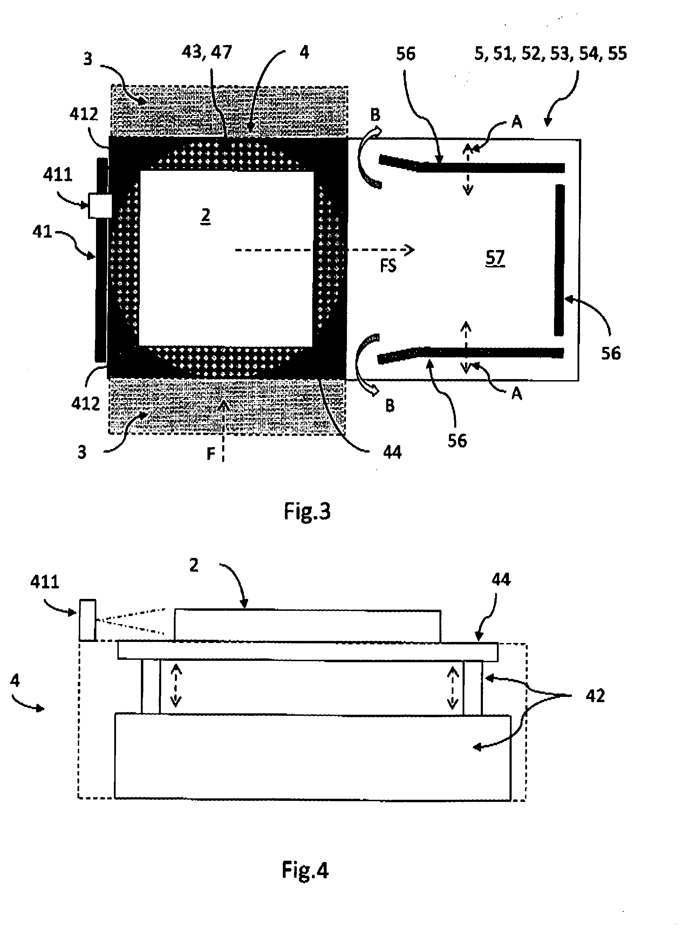

Fig.3 shows a pallet selection unit 4 and pallet receiving unit 5 in a top view. The carrier means 3 on both sides of the pallet selection unit 4 is indicated by the dashed grey area 3. The pallet selection unit 4 carries a pallet 2 on top of its upper surface 44 previously forwarded F to the pallet selection unit 4 by the connected carrier means 3. The pallet 2 shall be further forwarded FS as a selected pallet 2 to the neighbored pallet receiving unit 5, 51, 52, 53, 54, 55. In order to be able to select the pallet 2 out of multiple pallets 2 passing the pallet selection unit 4, the pallet selection unit comprises size detection means 41 arranged to identify the geometrical size and/or the alignment of the pallet 2 relative to the pallet receiving unit 5. Here, the size detection means 41 are arranged as a horizontal array of optical detection means 412 (e.g. optical sensors) in order to detect the length of the pallet side located in front of the optical detection means 412. In other embodiment, the size detection means may be arranged at more than one side of the pallet 2 in order to determine the length of all pallet sizes simultaneously. Here, the pallet 2 has to be rotated by 90° in order to determine the length of the other pallet side. The size detection means 41 further comprise reading means 411 to read coded information (e.g. a bar code or a RFID tag) eventually present on the pallet 2 indicating the pallet type and/or the pallet sizes and/or the pallet weight. Pallet size and pallet weight might be derived from the pallet type. The upper surface 44 of the pallet selection unit 4 is established by an array of 360° pivot-mounted balls 47 also acting as a alignment means 43 for the pallet 2, because the pallet 2 can be moved or rotated by the 360° pivot-mounted balls 47, preferably being moved or rotated automatically by a control unit (not shown in this figure) as part of the pallet selection unit 4 driving motors and/or actuators arranged in the cavity, where the balls are mounted. A suitable driving scheme will also allow rotating the pallet on top of the balls. The mounting of the 360° pivot-mounted balls might be similar to a trackball mounting for computers or the ball mounting of a mechanical computer mouse, where a part of the balls (or spheres) is mounted in an adapted cavity, where a smaller part of the balls protrude from the cavity. The protruding parts of the balls establish the upper surface 44 of the pallet selecting unit 4.

The pallet receiving unit 5, 51, 52, 53, 54, 55 in fig. 3 comprises positioning means 56 arranged at three sides above a loading surface 57 of the pallet receiving unit 5 to position the selected pallets 2 inside the pallet receiving unit 5, 51, 52, 53, 54, 55. The positioning means 56 are adjustable to different types of pallets by moving the positioning means 56 along the direction A indicated by the dashed arrow to adjust the width of the positioning means to the particular selected pallet 2 to be forwarded FS to the pallet receiving unit 5. In this embodiment the control unit of the pallet selection unit 4 provided a signal to the pallet receiving unit 5 specifying the width of the selected pallet 2, e.g. either measured directly or derived from coded information specifying the pallet type, and the pallet receiving unit 5 adjusts the positioning means 56 accordingly. The adjustment of the positioning means 56 may be controlled by a second control unit as part of the pallet receiving unit 5. The end of the positioning means 56 facing towards the pallet selection unit 4 comprise rotatable parts, which can be rotated along the arrow B to widen the opening of the pallet receiving unit 5 to still be able to receive even slightly misaligned pallets 2. The positioning means 56 at the side of the pallet receiving unit 5 facing away from the pallet selection unit 4 shall prevent the pallet from passing the pallet receiving unit 5. If a later transfer of the pallet to this side is desired, this particular positioning means 56 might be able to be lifted.

Fig. 4 shows a pallet selection unit 4 with weighting means 42 in a side view. Here the upper surface 44 carrying a pallet 2 is mounted on top of a scale located underneath the upper surface 44. The vertical movement of the upper surface 44 corresponds to the weight of the pallet 2. Such a direct measurement of the weight of the pallet 2 is able to distinguish several kinds of pallet types from each other. As an example, metal cages may have weights more than 100 kg, e.g. 120 kg. In contrast to that, ISO or EUR pallets have weight of approximately 15 kg. The weight measurements can be executed very accurate. Therefore even pallet types with small weight differences can be distinguished. Additionally or alternatively, the weight of a pallet can be derived from reading coded information attached to the pallet 2 using suitable reading means 411.

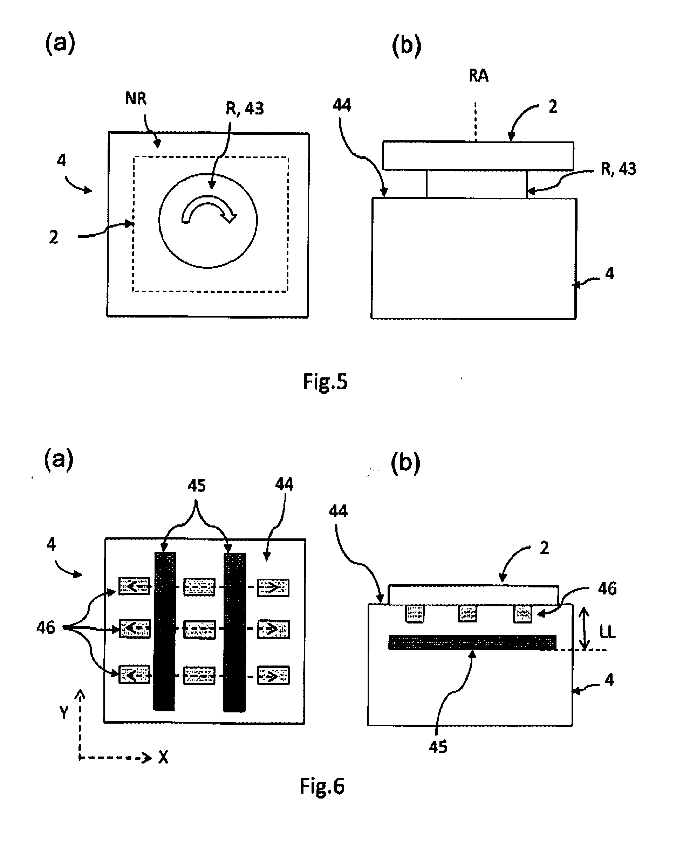

Fig.5 shows a pallet selection unit 4 with rotatable alignment means 43 in (a) top view and (b) side view. The upper surface 44 of the pallet selection unit 4 is divided into a rotating part R and a non-rotating part NR. The pallet 2 is only located on the rotating part R by lifting the rotating part R above the upper surface 44. Alternatively, also the non-rotating part can be lowered below the upper surface 44 (not shown here). The pallet 2 can be aligned to the pallet receiving unit 5 by rotating the rotatable part R along the rotation axis RA, see also the arrow indicating the rotation in view (a).

Fig.6 shows a pallet selection unit 4 with two arrays 45, 46 of carrier means in (a) top view and (b) side view. The arrays 45, 46 are aligned vertically to each other in order to be able to forward the pallet either in X-direction or in Y-direction. In order to forward a pallet along the X,Y directions (indicated by the dashed arrows in figure 5a), one of the arrays has to be lowered to a lower level LL below the upper surface 44 established by the other array of carrier means not lowered. As an example in figure 5b, the array 45 is lowered to the lower level LL, while the pallet 2 can be forwarded along the moving direction of array 46 now establishing the upper surface 44 of the pallet selection unit 4. Both arrays can be operated in back and forth direction (as indicated by the dashed double arrows).

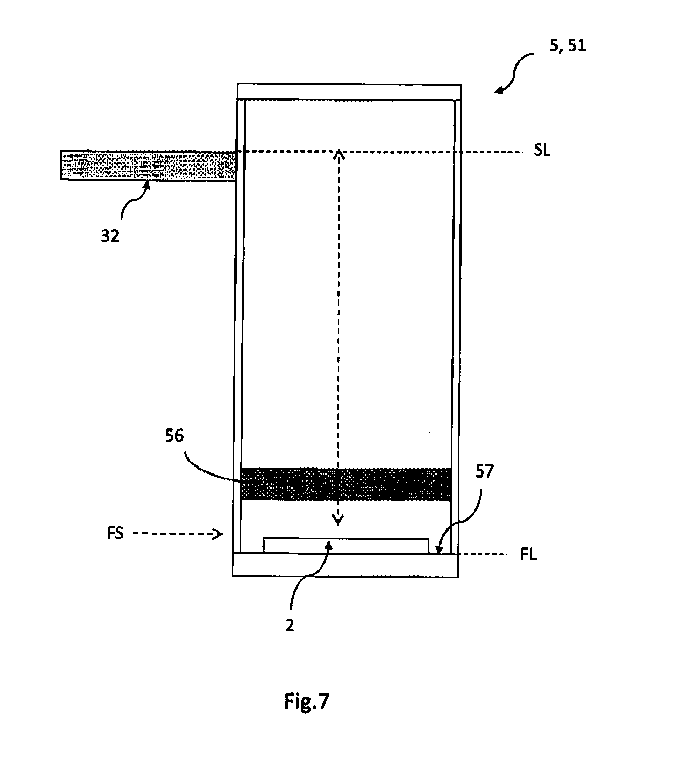

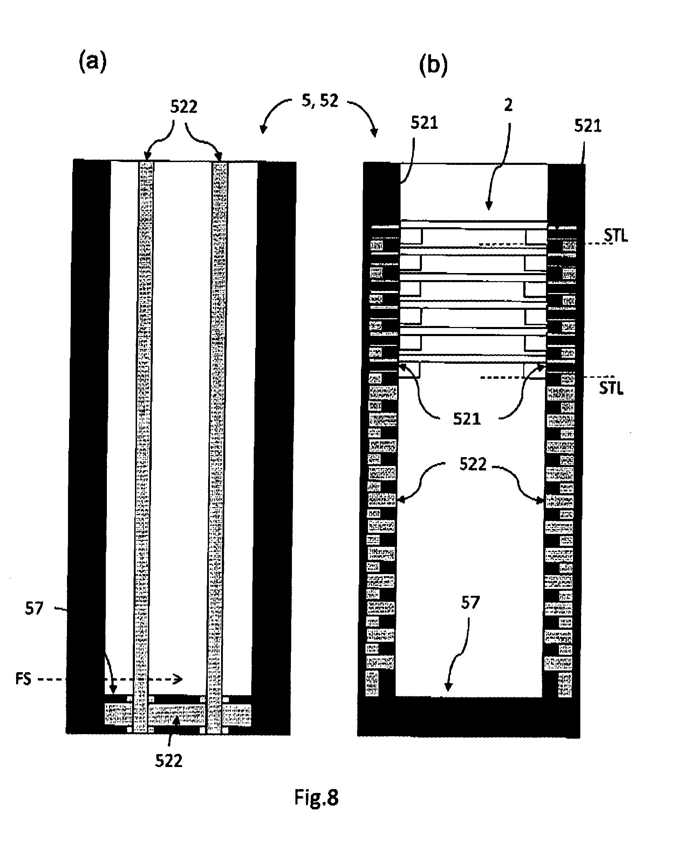

Fig.7 shows a pallet receiving unit 5 as a pallet lift 51. The pallet 2 selected by the pallet selection unit 4 is forwarded FS to the loading surface 57 of the pallet lift 51. The positioning means 56 are arranged above the pallet 2 for ease of understanding. However, to position the pallet 2, the positioning means 56 have to be arranged at the same height as the pallet 2. The loading surface 57 of the pallet lift 51 is arranged to be lifted or lowered to a second level of height SL in order to forward the pallet 2 via second carrier means 32 arranged at a second level of height SL. In this example the second level SL of height is above the first level of height FL. In other embodiment, the pallets may be transferred to basements, where the second level of height SL is below the first level of height FL. The lifting process is indicated by the vertical dashed arrow. To lift the pallets, the pallet lift comprises suitable lifting means, which could be-identical to the lifting unit 522 shown in figure 8 for pallet storage magazines. People skilled in the art may choose other lifting means within the scope of this invention.

Fig.8 shows a pallet receiving unit 5 as a pallet storage magazine 52. The pallet storage magazine 52 comprises multiple movable pick-up elements 521 to support at least one pallet 2 stored in the pallet storage magazine and a lifting unit 522 suitable to vertically lift the pallets 2 to a storing level STL in order to vertically stack the pallets 2 one upon each other. The lifting unit 522 comprises all required mechanical parts and electrical parts for lifting the pallets 2. The lifting unit may comprise 2-4 synchronized lift elements including 1-2 pick-up units, which take hold of the pallet to-be-lifted. As an example, the pick-up unit may comprise two movable bolds arranged on two opposite sides of the lifting unit 522 at the same height. The movable bolds will be arranged under the pallet formally inserted into the pallet lift 52 in order to carry the pallet 2 during lifting the pallet 2 to the storing level STL. The lifting unit 522 can be operated either with electrical motors or as a pneumatic system or as a combination of these two. Through suitable programming, the lifting unit 522 of the pallet storage magazine 52 can handle multiple pallets 2 at the same time. All details of the lifting unit shown for the pallet storage magazine can also be applied for the pallet lift 51. At the storing level STL, the movable pick-up elements 521 overtake supporting of the pallet from the pick-up unit (here movable bolds).

The movable bolds are removed from their supporting position and lowered to their initial position in order to lift the next pallet 2 to the next storing level. The movable pick-up elements 521 may be rotatable in order to support or release a pallet 2 entering or leaving its storing level inside the pallet storage magazine 52. Alternatively the movable pick-up elements 521 may be arranged as movable back and forth or may be rotatable around a horizontal rotation axis to achieve the same purpose. The movable pick-up elements 521 and the movable pick-up units might be controlled by a pallet lift control unit.

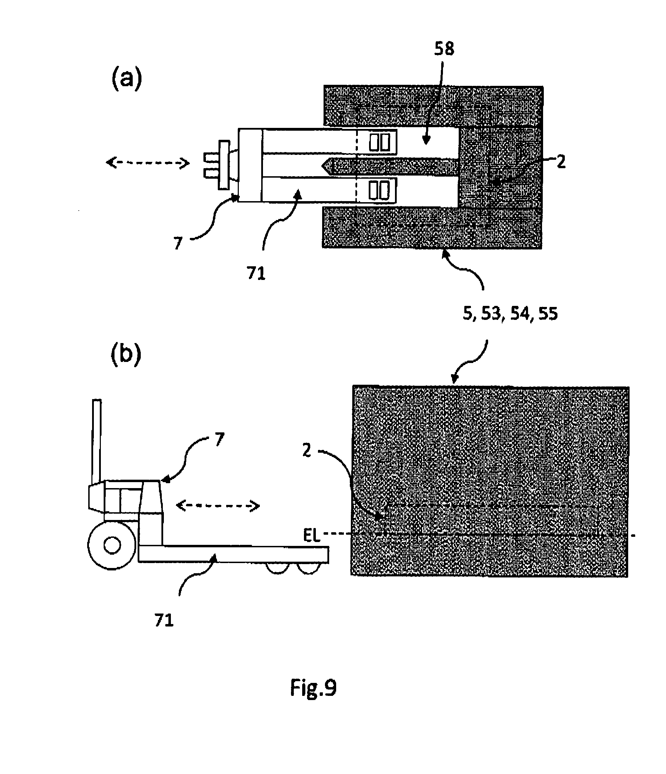

Fig.9 shows a pallet receiving unit 5 as a pallet pre-stacker 53 or as an entry / exit terminal 54, 55 comprising a cavity 58 suitable to insert the fork 71 of a forklift 7 below the entry and/or exit level EL of the pallets 2 denoting the level, at which the pallet 2 rests for further handling. The cavity 58 may have any suitable shape allowing placing of a forklift 7 underneath the pallet 2 present at the exit/entry level EL. However, a cavity 58 with a U-shape has the advantage to guide the fork 71 of a forklift 7 into the pallet receiving unit 5 resulting in a proper placing of the pallet 2 on top of the forklift 7 for taking the pallet 2 out of the system 1 according to the present invention. For inserting the pallet 2 into the system 1, the U-shaped cavity 58 is also beneficial, because the position of the pallet 2 is determined and further positioning to forward the pallet 2 to the carrier means 3 is not required.

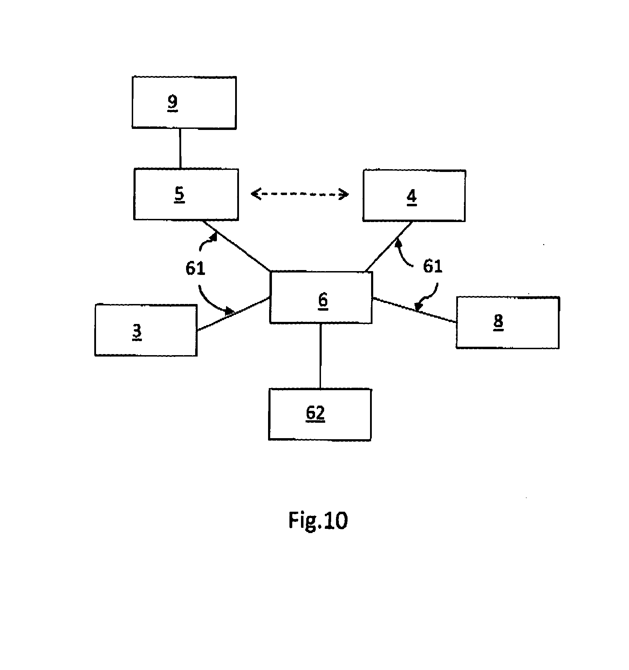

Fig.10 shows an embodiment of the system 1 according to the present inventions, where a control unit 6 is connected to the pallet receiving units 5, the pallet selection units 4 and the carrier means 3 (first, second, third, ... carrier means) via data connections 61 to control the selection, the storing, the lifting, the inserting and/or the providing of the pallets. Such a system control will provide an improved efficiency of the system according to the present invention with respect to the time required to forward a pallet from the pallet entry terminal to a pallet storage magazine or from the pallet storage magazine to the pallet exit terminal. As an example the control unit may also administrate the number, location, type, and storage time of the pallets within the system. The control unit may also administrate orders of pallets, preferable of a certain type of pallets, made in advance for reserving pallets for future transports. Therefore the control unit comprises a data base 62 or is connected to a data base 62. The control unit may be an additional direct data connection between pallet selection unit 4 and the pallet receiving unit 5 directly connected (for pallet forwarding) to this pallet selection unit 4 in order to prepare the connected pallet receiving unit 5 for the pallet 2 to be inserted in the pallet receiving unit 5. The control unit 6 is further connected to a requesting terminal 8 via a data connection 61. The data connection 61 can be the same kind of data connection as used to connect the pallet selection 4 and/or pallet receiving unit 5. Alternatively, the data connection 61 can be established by other suitable techniques. The requesting terminal 8 may also be a computer terminal, where the number of pallets 2 and/or the pallet type can be inserted. Alternatively the requesting terminal 8 might be a hand-held device with a data insert field, preferably with a display displaying the inserted data, to insert the required number of pallets 2 and/or the required pallet type. As an example the hand-held device could be connected to the control unit 6 wirelesses via a RFID connection, via a radio connection or via an infrared connection. In another embodiment the requesting terminal 8 may be a remote terminal connected to the control unit 6 via internet.

While the invention has been illustrated and described in details in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference sign in the claims should not be construed as limiting the scope.

### LIST OF REFERENCE SIGNS

- 1: System for sorting and shipping objects
- 2: pallet
- 3: carrier means
- 32: second carrier means
- 33: third carrier means
- 4: pallet selection unit
- 41: size detection means
- 411: reading means
- 412: optical detection means
- 42: weight detection means
- 43: alignment means
- 44: upper surface
- 45: first array, pallet selection unit
- 46: second array, pallet selection unit
- 47: array of 360° pivot-mounted balls
- 5: pallet receiving unit
- 51: pallet receiving unit as a pallet lift
- 511: first pallet lift
- 512: second pallet lift
- 52: pallet receiving unit as pallet storage magazine
- 521: movable pick-up element
- 522: lifting unit
- 53: pallet receiving unit as vertical pallet pre-stacker
- 54: pallet receiving unit as vertical pallet entry terminal
- 55: pallet receiving unit as vertical pallet exit terminal
- 56: positioning means
- 57: loading surface of the pallet receiving unit
- 58: cavity for forks of forklifts
- 6: control unit
- 61: data connection
- 62: data base
- 7: forklift
- 71: fork of forklift
- 8: requesting terminal
- 9: signal means
- R: rotatable part of the pallet selection unit
- NR: non-rotatable part of the pallet selection unit
- RA: rotation axis
- LL: lower level, pallet selection unit
- F: forwarding direction of pallets
- FS: forwarding direction of selected pallets
- FN: forwarding direction of non-selected pallets
- A: adjusting of positioning means
- B: broadening of positioning means
- FL: first level of height
- SL: second level of height
- STL: storing level insight the pallet storage magazine
- EL: entry or exit level for pallets in pallet pre-stacker, entry terminal, exit terminal
- WL1: first working level
- WL2: second working level
- WL3: third level of height
- W: wall of a building

## Claims

1. System (1) for storing and providing pallets (2) comprising at least one pallet receiving unit (5) arranged as a pallet storage magazine (52) for storing pallets of a certain type of pallets, at least one pallet receiving unit (5) arranged as a pallet exit terminal (55) for providing pallets, at least one carrier means (3, 32, 33) connecting the pallet receiving units (5, 52, 55) to forward pallets between the pallet receiving units (5, 52, 55), at least one control unit (6) at least connected to the pallet receiving units (5, 52, 55) via a data connection (61) to control at least storing, requesting, and providing of the pallets, and at least one requesting terminal (8) connected to the control unit (6) to request the providing of a certain number of pallets (2) of a certain type of pallets to one or more pallet exit terminals (55) for being taken out of the system (1).

2. System (1) for storing and providing pallets (2) according to claim 1, **characterized in that** the requesting terminal (8) is a remote control terminal to insert the required number of pallets (2) and/or the required pallet type, preferably a hand-held device with a data insert field, more preferably with a display displaying the inserted data.

3. System (1) for storing and providing pallets (2) according to claim 1 or 2, **characterized in that** the requesting terminal (8) is arranged to allow requesting of a particular pallet exit terminal (55) for providing the pallets (2).

4. System (1) for storing and providing pallets (2) according to any of the preceding claims, **characterized in that** the pallet exit terminals (55) comprise a signal means (9), preferably an visual signal means (9), to indicate the pallet exit terminal (55) providing the requested pallets (2)

5. System (1) for storing and providing pallets (2) according to any of the preceding claims, **characterized in that** the pallet storage magazine (52) comprises multiple movable pick-up elements (521) to support at least one pallet (2) and a lifting unit (522) suitable to vertically lift the movable pick-up elements (521) and to hold the pick-up element at a storing level (STL) in order to vertically stack the pallets (2) one upon the other each supported by at least one movable pick-up element (521) inside the pallet storage magazine (52).

6. System (1) for storing and providing pallets (2) according to any of the preceding claims, **characterized in that** at least one of the pallet receiving units is arranged as a pallet pre-stacker (53) and/or a entry terminal (54) and/or the pallet exit terminal (55) on a first working level (WL1) accessible for forklifts (7) and/or trucks.

7. System (1) for storing and providing pallets (2) according to claim 6, **characterized in that** the pallet pre-stacker (53) and/or the pallet entry terminal (54) and/or the pallet exit terminal (55) comprises a cavity (58) suitable to insert the fork (71) of a forklift (7) below an entry and/or exit level (EL) of the pallets (2), preferably a cavity with a U-shape.

8. System (1) for storing and providing pallets (2) according to any of the preceding claims, **characterized in that** the system (1) comprises at least one pallet receiving unit (5) arranged as a pallet lift (51) to lift the pallets (2) from a first level of height (FL) to a second level of height (SL) In order to forward the pallets (2) to a second carrier means (32) arranged at a second level of height (SL).

9. System (1) for storing and providing pallets (2) according to claim 8, **characterized in that** at least a first pallet lift (511) is arranged on a first working level (WL1) accessible for forklifts (7) and/or trucks.

10. System (1) for storing and providing pallets (2) according to claim 8 or 9, **characterized in that** the difference of height between the second level of height (SL) and the first working level (WL1) is larger than the height of forklifts (7) and/or trucks.

11. System (1) for storing and providing pallets (2) according to any of the preceding claims, **characterized in that** the system (1) further comprises at least one pallet selection unit (4) arranged within the carrier means (3, 32) to select at least one pallet (2) according to the type of the pallet out of multiple pallets (2) of different pallet types passing the pallet selection unit (4) and to forward the selected pallet (2) to the pallet receiving unit (5, 51, 52, 53, 54, 55) and to forward the non-selected pallets (2) along the at least one carrier means (3, 32).

12. System (1) for storing and providing pallets (2) according to claim 11, **characterized in that** the pallet selection unit (4) comprises size detection means (41) arranged to identify the geometrical size of the pallet (2) and/or the alignment of the pallet (2) relative to the pallet receiving unit (5) and/or weight detection means (42) arranged to identify the weight of the pallets (2) in order to select the pallet (2) of at least one pallet type, preferably further comprising alignment means (43) to align the selected pallet (2) relative to the pallet receiving unit (5).

13. Method to operate a system (1) for storing and providing pallets (2) according to claim 1, comprising the steps of
- requesting a certain number of pallets (2) of a certain type of pallets to be provided at one or more pallet receiving terminals (5) arranged as pallet exit terminals (55) via a requesting terminal (8) connected to a control unit (6) controlling at least storing, requesting, and providing of the pallets (2),
- forwarding (F) the pallets (2) from at least one pallet receiving unit (5) arranged as a pallet storage magazine (52) to the pallet exit terminal (55), and
- providing the pallets (2) at the pallet exit terminal (55) for being taken out of the system (1).

14. Method to operate a system (1) for storing and providing pallets (2) according to claim 13, further comprising the steps of
- transporting pallets (2) of different pallet types in an arbitrary sequence via at least one carrier means (3, 32, 33) to at least one pallet selection units (4),
- selecting the pallet (2) according to the type of the pallets out of multiple pallets (2) of different types of pallets passing the pallet selection unit (4),
- forwarding (SF) the selected pallet (2) to at least one receiving unit (5, 51, 52, 53, 54, 55) connected to the pallet selection unit (4), and
- forwarding (FN) the non-selected pallets (2) along the at least one carrier means (3, 32, 33).

15. Method to operate a system (1) for storing and providing pallets (2) according to claim 13 or 14, further comprising the step of lifting or lowering the pallets (2) from a first working level (WL1) to a second working level (WL2) by a pallet receiving units (5) arranged as a pallet lift (51).
